# EUROPEAN PATENT APPLICATION

(11) **EP 3 288 202 A1**
(43) Date of publication of application: **28.02.2018**
(21) Application number: 16306075.9
(22) Date of filing: 23.08.2016
(51) Int. Cl.: H04J 14/02, H04Q 11/00

(54) **OPTICALLY TRANSPARENT NETWORK**

(71) Applicant: ALCATEL LUCENT, 92100 Boulogne-Billancourt (FR)
(72) Inventor: USCUMLIC, Bogdan, 91620 NOZAY (FR); MESTRE ADROVER, Miquel Angel, 91620 NOZAY (FR)
(74) Representative: Loyer & Abello

(57) **Abstract**

An optical network (20) comprising a plurality of optical nodes (10), each optical node of the optical network being configured so as to generate a plurality of optical buses, so that, for a plurality of pairs of nodes of the network, at least one optical bus connects the pair of nodes, an optical bus being a transparent optical path passing through a sequence of nodes optically connected in series, the optical network further comprising at least one scheduler for scheduling the emission of packets by the packet transmitters of at least all the nodes connected to a same bus (30).

## Description

### Field of the invention

The invention relates to the technical field of optically transparent communications networks employing a packet granularity in particular for data center.

### Background

Optical packet switching (OPS) is a transmission technique at which information is encapsulated in wavelength- and time- multiplexed slots, providing sub-wavelength granularity and enabling rapid adaptation to dynamic traffic. It is very desirable to combine such technique with optical transparency, which consists on an end-to-end transmission remaining within the optical domain, avoiding optical-electronic-optical (OEO) conversion at the intermediate network nodes. When performing an OEO conversion at a certain intermediate node, such node has an extra charge on traffic, the "transit" traffic, which is added to its own traffic to be transmitted. The more OEO conversions are performed, the more "transit" traffic is generated, and the larger the node capacity has to be. Furthermore, OEO conversions induce larger latency due to the conversion itself and to the buffering required in the electronic domain. Thus optical transparency reduces the traffic charge in optical nodes, reducing node capacity requirement and latency. Furthermore, optical transparency reduces power consumption as OEO conversions are power-hungry operations.

Optical packet networks employing Wavelength Division Multiplexing (WDM) provide flexibility, high capacity and efficient use of the bandwidth through multiplexing techniques in both time and wavelength. An optical packet add and drop multiplexer (OPADM) for a WDM network makes it possible to perform fundamental functions such as optical packet insertion, optical packet extraction and transparent forwarding of transit traffic on each of a plurality of wavelength channels. The optical transparency of the transit path limits dramatically the number of transponders required to make such equipment.

### Summary

The invention provides an optical network comprising a plurality of optical nodes, an optical node comprising:
- a plurality of node input ports each suitable for receiving a WDM input signal comprising optical packets carried on a plurality of wavelength channels;
- a plurality of node output ports , each suitable for passing a WDM output signal comprising optical packets carried on a plurality of wavelength channels;
- a transit section configurable to selectively pass or block any wavelength channel from any node input port to any node output port;
- a plurality of optical packet receivers for demodulating optical packets;
- a plurality of optical packet transmitters for emitting optical packets;
   the optical network further comprising a plurality of optical links, an optical link connecting a node output port of an optical node to a node input port of an adjacent optical node;
   the transit section of all the nodes of the optical network being configured so as to generate a plurality of optical buses, an optical bus being a transparent optical path passing through a sequence of nodes optically connected in series, so that, for a plurality of pairs of nodes of the network, at least one of the optical buses connects the pair of nodes,
   the optical network further comprising at least one scheduler for scheduling the emission of packets by the packet transmitters of at least all the nodes connected to a same bus.

Since a direct optical bus exists between a plurality of node pairs, the plurality of node pairs are transparently connected and OEO conversion is minimized in the network.

Since the invention provides a full optical transparent communication between a plurality of nodes within pre-established optical buses, latency is minimized and the number of interfaces can be decreased, therefore reducing cost and consumption.

As a consequence, the energy consumption in the network is reduced. Indeed, OEO conversion of the transit traffic implies additional transponders, buffers and larger electronic switching matrices.

Since the transit traffic is never queued, the end-to-end latency comes only from the insertion process, and not from the queueing and re-inserting at intermediate nodes. The latency due to insertion process can be efficiently limited by proper network dimensioning.

Since the emission and insertion of packets is centralized or distributed, the scheduling and control plane is simplified.

Since the network is not restricted to a predefined topology, it is highly scalable.

The optical buses can be reconfigured in order to adapt to a change of traffic in the network. The network allows protection of traffic in case of an optical link failure in the network. Indeed, in the event of an optical link failure, optical buses can be reconfigured to avoid the failed optical link. In particular, backup optical buses may be preconfigured, so that in the event of an optical link failure, optical packets are rerouted to a backup optical bus in order to prevent traffic loss.

Thanks to physical separation of optical buses, the network exhibits no contention due to simultaneous use of network resources.

In some embodiments of the above optical network, the transit section of all the nodes of the optical network are configured so that, for any pair of nodes of the network, at least one of the optical buses connects the pair of nodes.

Since a direct optical bus exists between any two nodes of the network, any two nodes of the network are transparently connected and OEO conversion is eliminated in the network.

In some embodiments of any of the above optical network, the transit section of an optical node comprises a multiport-to-multiport wavelength selective switch (WSS) module comprising:
- a plurality of WSS input ports each connected to a different node input port; and
- a plurality of WSS output ports each connected to a different node output port;
   wherein the multiport-to-multiport WSS module is operable to route independently each wavelength channel from each WSS input port to any WSS output port.

In some embodiments of any of the above optical network, the transit section of an optical node comprises:
- for each node input port, a wavelength demultiplexer comprising :
   a demultiplexer input port connected to said node input port; and
   a plurality of demultiplexer output ports;
      the wavelength demultiplexer being operable to separate the WDM input signal received at the node input port into demultiplexed signals, each demultiplexed signal carried on a wavelength channel, each demultiplexed signal being outputted to a different demultiplexer output port;
- for each node output port, a wavelength multiplexer comprising :
   a plurality of multiplexer input ports; and
   a multiplexer output port connected to the node output port;
      the wavelength multiplexer being operable to multiplex the demultiplexed signals received at the multiplexer input ports into a WDM output signal outputted at the node output port;
- an optical space switch matrix (OSSM) comprising :
   for each demultiplexer output port a dedicated OSSM input port, each demultiplexer output port being connected to the dedicated OSSM input port;
   for each multiplexer input port a dedicated OSSM output port, each multiplexer input port being connected to the dedicated OSSM output port;
      the OSSM being configurable to connect any OSSM input port to any OSSM output port.

In some embodiments of any of the above optical network, an optical node further comprises, for a demultiplexer output port, an optical splitter for splitting the demultiplexed signal into a first optical signal forwarded to the dedicated OSSM input port and a second optical signal forwarded to an optical packet receiver adapted to demodulate optical packets on the wavelength channel on which said demultiplexed signal is carried.

In some embodiments of any of the above optical network, an optical node further comprises, for each of the multiplexer input port, an optical coupler for coupling a signal emitted by an optical packet transmitter into the demultiplexed signal.

In some embodiments of any of the above optical network, the transit section of a node comprises, for each of the demultiplexer output ports, a packet blocker configurable to selectively pass or block an individual optical packet carried on the demultiplexed signal.

In some embodiments of any of the above optical network, the transit section of an optical node comprises for each of the node input ports, an optical splitter for splitting the input signal into a first optical signal forwarded to the transit section and a second optical signal forwarded to an optical packet receiver adapted to demodulate optical packets on any wavelength channel.

In some embodiments of any of the above optical network, the transit section of an optical node comprises for each of the node output ports, an optical coupler for coupling a signal emitted by an optical packet transmitter into the transit section.

In some embodiments of any of the above optical network, the transit section of an optical node further comprises for each node input port, a wavelength selective packet blocker configurable to selectively pass or block an individual optical packet carried on any selected wavelength channel.

In some embodiments of any of the above optical network, an optical node further comprises, for each of the node input ports, an optical splitter for splitting the WDM input signal into a first optical signal forwarded to the transit section and a second optical signal forwarded to an optical packet receiver.

In some embodiments of any of the above optical network, an optical node further comprises, for each of the node output ports, an optical coupler for coupling a signal emitted by an optical packet transmitter into a WDM output signal.

In some embodiments of any of the above optical network, the scheduler is a centralized scheduler for scheduling the emission of packets by all the packet transmitters of all nodes.

In some embodiments of any of the above optical network, an optical node comprises, for each bus passing through said optical node, a packet transmitter dedicated to said bus, the optical network comprising, for each optical bus, a scheduler for scheduling the emission of packets by all the packet transmitters dedicated to said bus.

In some embodiments of any of the above optical network, an optical bus is an optical path passing through a sequence of nodes optically connected in series for a given wavelength channel, the transit section of each node of the sequence being configurable to pass any wavelength channel received at any node input to any node output.

The invention provides a transparent optical network that offers some or all of the following features:
- Progressive scalability or suitability for pay-as-you grow deployment,
- Low contention or contentionless operations,
- Colorless ports, i.e. ability to direct any wavelength from a given WDM port to a given receiver in the drop device or from a given transmitter in the add device to a given WDM port,
- Multidirectional ports, i.e. ability to direct signals from any node input to a given port in the drop device or ability to direct signals from a given port in the add device to any node output,
- High add and drop capacity,
- High cascadability resulting from low impact on transit traffic,
- High connectivity degree,
- Cost-efficiency,
- Compact footprint.

### Brief description of the drawings

These and other aspects of the invention will be apparent from and elucidated with reference to the embodiments described hereinafter, by way of example, with reference to the drawings.
Figure 1 is a functional representation of an optical network in accordance with a first embodiment.
Figure 2 is a functional representation of an optical network in accordance with a second embodiment.
Figure 3 is a functional representation of an optical node that can be used in the optical network of figure 1 or 2;
Figure 4 is a functional representation of an optical node that can be used in the optical network of figure 1 or 2;
Figure 5 is a functional representation of an optical node that can be used in the optical network of figure 1 or 2;
Figure 6 is a functional representation of an optical node that can be used in the optical network of figure 1 or 2.

### Detailed description of the embodiments

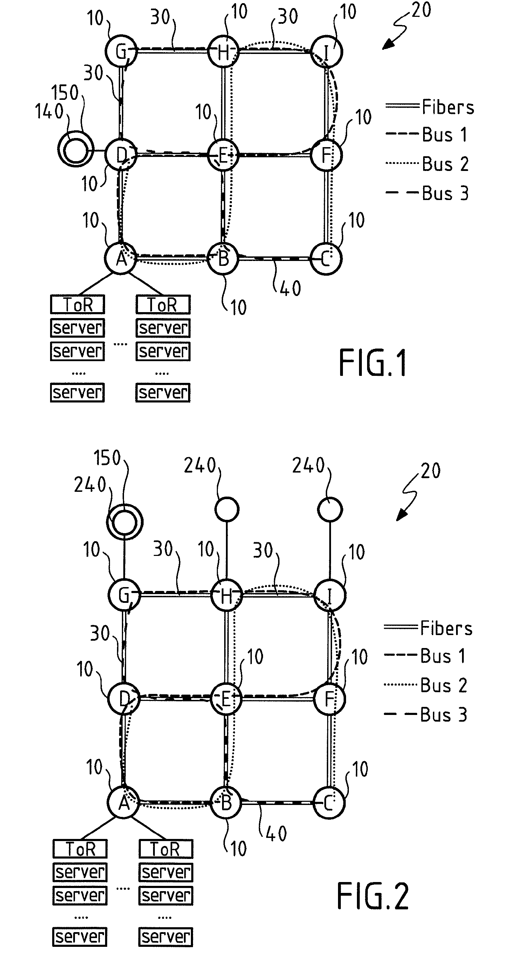

Figures 1 and 2 show an optically transparent network 20. An optically transparent optical signal is transmitted from a source node, through one or more transit nodes (if any), to a destination node without being converted into electrical signals at any point along the way.

An optical link 40 may be an optical fiber, a core of an optical multicore fiber, or a mode of an optical multimode fiber, configured to transmit optical signals in one or both directions. Each node 10 is adapted to send and/or receive optical signals via the corresponding optical links 40.

In particular, the network 20 may be a mesh network, a mesh network being a network in which, with the exception of nodes in certain terminal branches, two or more different communication paths exist for connecting any pair of nodes. Mesh networking is advantageous because, generally, it enables continuous connections and reconfiguration around blocked communication paths by hopping from node to node until a connection can be established.

An optical bus 30 is a transparent optical path passing through a sequence of nodes 10 optically connected in series. In particular, an optical bus 30 might be a transparent optical path passing through a sequence of nodes 10 optically connected in series for all wavelength channels, for a group of wavelength channels, or for a given wavelength channel.

All the nodes 10 of the optical network 20 are configured so as to generate a plurality of optical buses 30.

For a plurality of pairs of nodes 10, 410, 510, 610, 710 of the network 20, at least one of the optical buses 30 connects the pair of nodes 10,410, 510, 610, 710.

In particular, all the nodes 10 of the optical network 20 may be configured so that, for every two nodes 10 of the network 20, at least one optical bus 30 connects the two nodes 10. This makes it possible for any node to transfer packets to any other node of the network without any Optical-Electrical-Optical (OEO) conversion at any point along the way. The absence of OEO conversion improves the network latency. Indeed, since the inserted traffic is subject to queueing and scheduling only at the insertion, and not at intermediate nodes, the latency is significantly improved.

An optical bus can be used for bidirectional communication, or for the unidirectional communication between the connected nodes.

In the illustrative embodiments of figures 1 and 2, the reach limit is set to 7 nodes, the reach limit being defined as a maximum number of nodes to pass to reach any destination node from any node.

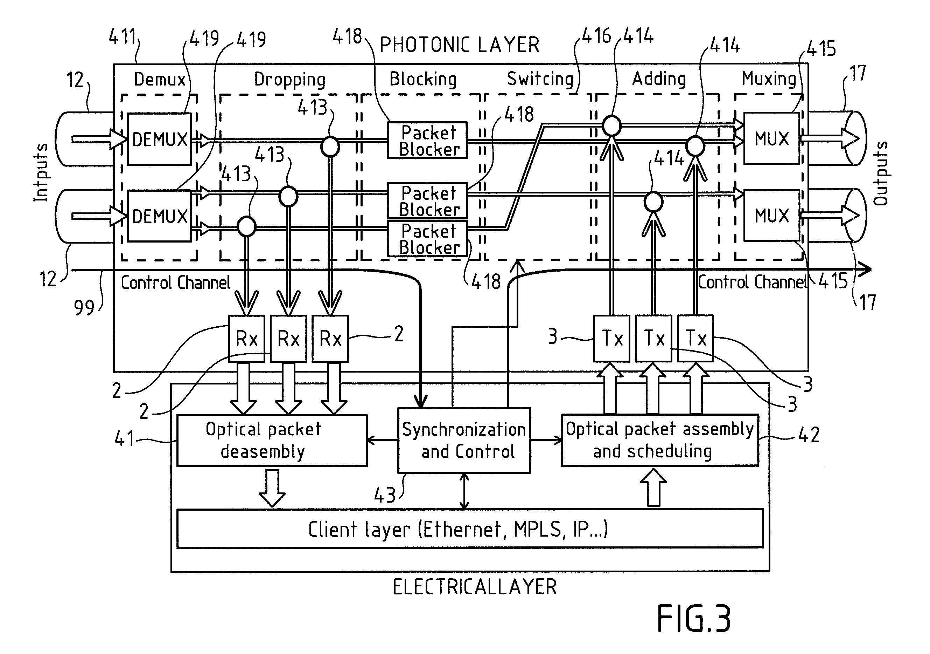

As illustrated by figures 3 to 6, an or each optical node 10, 410, 510, 610, 710 comprises:
- a plurality of node input ports 12 suitable for receiving a WDM input signal comprising optical packets carried on a plurality of wavelength channels;
- a plurality of node output ports 17 suitable for passing a WDM output signal comprising optical packets carried on a plurality of wavelength channels;
- a transit section 411, 511, 611, 711 configurable to selectively pass or block any wavelength channel from any node input port to any node output port
- a plurality of optical packet receivers 2 for demodulating optical packets;
- a plurality of optical packet transmitters 3 for emitting optical packets;

A WDM input/output signal is a signal carrying a number of wavelength channels by using Wavelength Division Multiplexing.

The transit section 411, 511, 611, 711 of a or each node 10, 410, 510, 610, 710 is configurable to selectively pass or block any wavelength channel received at any node input 12 to any node output 17 so as to connect optically said node with an adjacent node connected to said node input 12 and with an adjacent node 10 connected to said node output 17 for said wavelength channel.

In reference to figure 3, the transit section 411 of an optical node 410 may comprise:
- for each node input port 12, a wavelength demultiplexer 419;
- for each node output port 17, a wavelength multiplexer 415;
- an optical space switch matrix (OSSM) 416.

A wavelength demultiplexer 419 comprises one single demultiplexer input port optically connected to the associated node input port 12, and a plurality of demultiplexer output ports.

A wavelength demultiplexer 419 is operable to separate the WDM input signal received at the node input port 12 into demultiplexed signals, each demultiplexed signal carried on a wavelength channel, each demultiplexed signal being outputted to a different demultiplexer output port.

A wavelength multiplexer 415 comprises a plurality of multiplexer input ports and one single multiplexer output port optically connected to the associated node output port 17.

A wavelength multiplexer 415 is operable to multiplex the demultiplexed signals received at the multiplexer input ports into a WDM output signal outputted at the node output port 17.

The OSSM 416 comprises:
- for each demultiplexer output port a dedicated OSSM input port, each demultiplexer output port being optically connected to the dedicated OSSM input port;
- for each multiplexer input port a dedicated OSSM output port, each multiplexer input port being optically connected to the dedicated OSSM output port.

The OSSM 416 is configurable to generate independent transparent optical paths between any OSSM input port and any OSSM output port.

The OSSM may be implemented with diverse technologies, e.g. MEMS-operated reflectors or piezoelectric optical beam steering.

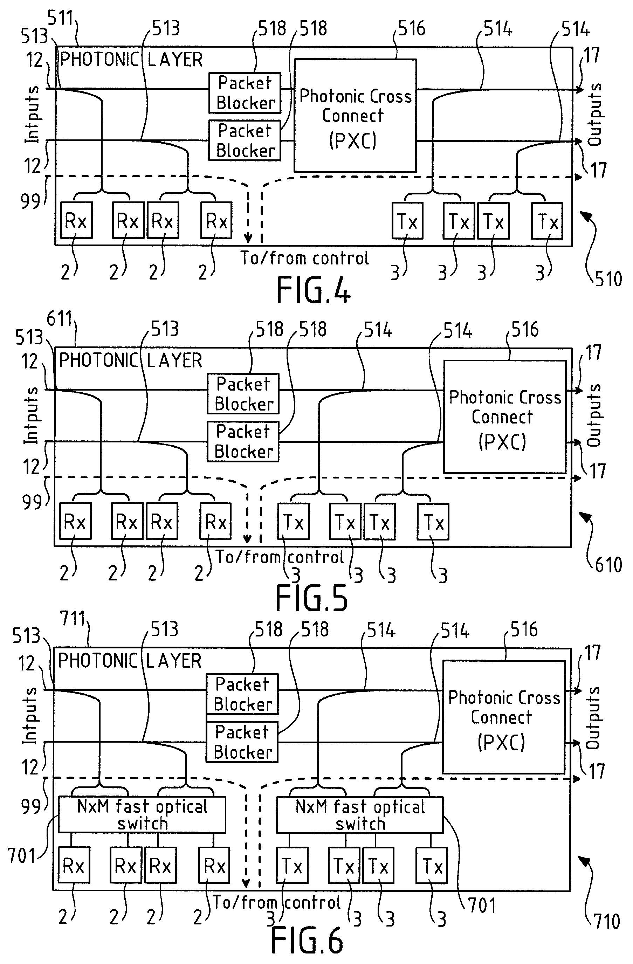

Alternatively, in reference to figure 4 to 6, the transit section 511, 611, 711 may comprise a multiport-to-multiport WSS module 516.

The multiport-to-multiport WSS module 516 comprises:
- a plurality of WSS input ports each adapted to receive an input WDM signal comprising optical packets carried on a plurality of wavelength channels, and
- a plurality of WSS output ports each adapted to pass an output WDM signal comprising optical packets carried on a plurality of wavelength channels.

The multiport-to-multiport WSS module 516 is operable to route independently each wavelength channel of each WSS input port to any WSS output port. The wavelength channels received at any given WSS input port are independently selectable and independently switchable to any of the WSS output ports. In other words, an input port may be configured to pass or block each wavelength channel independently and, for those wavelength channels which are passed, to pass them to independently selected output ports.

The multiport-to-multiport WSS module may be implemented in several ways.

In an embodiment, the multiport-to-multiport WSS module is an integrated non-blocking component that exhibits no wavelength contention as described by Nicolas K. Fontaine, Roland Ryf, David T. Neilson, "NxM Wavelength Selective Crossconnect with Flexible Passbands", Paper PDP5B2, Conference OFC/NFOEC'2012, March 2012.

In all embodiments, the transit section 511, 611, 711 of an optical node may further comprises for a or each node input port 12, a wavelength selective packet blocker 518 configurable to selectively pass or block an individual optical packet carried on any selected wavelength channel.

A wavelength selective packet blocker 518 makes it possible to selectively erase individual packets, e.g. to make room for added traffic on any wavelength channel of a WDM signal. The time slot of the bus can be reused by downstream nodes for emitting packets. Slot reuse allows a very efficient capacity use, since it enables optical traffic grooming in the network.

An example of a wavelength selective packet blocker 518 is given in "Monolithic Integrated Slot-Blocker for High Datarate Coherent Optical Slot Switched Networks" journal of lightwave technology, vol. 34, no. 8, april 15, 2016.

When the transit section comprises a wavelength demultiplexer 419, the transit section 411 of a or each node 410 may comprise for each of the demultiplexer output port, a packet blocker 418 configurable to selectively pass or block an individual optical packet carried on the demultiplexed signal.

A packet blocker 418 makes it possible to selectively erase individual packets, e.g. to make room for added traffic on the associated wavelength channel. The time slot of the bus can be reused by downstream nodes for emitting packets.

A packet blocker 418 is for example an optical gate, e.g. a Semiconductor Optical amplifier SOA.

In all embodiments, an optical node 510, 610, 710 may further comprise, for a or each node input port 12, an optical splitter 513 for splitting the WDM input signal into a first optical signal forwarded to the transit section 511, 611, 711 and a second optical signal forwarded to an optical packet receiver 2 tunable to demodulate optical packets on any wavelength channel.

An optical splitter 513 makes it possible to receive packets carried by any optical bus 30 passing through the node input port 12.

In particular, when the transit section 511, 611, 711 comprises a wavelength selective packet blocker 518 associated with the node input port 12, the first optical signal is forwarded to said wavelength selective packet blocker 518. Otherwise, the first optical signal is forwarded to the wavelength demultiplexer 419 associated with the node input port 12 or to the WSS input port 516 associated with the node input port 12.

In all embodiments, an optical node 410, 510, 610, 710 may comprise for a or each node output port 17, an optical coupler 514 for coupling a signal emitted by an optical packet transmitter 3 into a WDM output signal.

An optical coupler 514 makes it possible to inject packets into any optical bus passing through the WDM output port 17.

In particular, when the transit section 511, 611, 711 comprises a WSS module 516, the optical coupler 514 may couple a signal emitted by an optical packet transmitter 3 into a WSS input in reference to figures 5 and 6, or downstream of a WSS output in reference to figure 4.

When the transit section 411 of a node comprises a wavelength demultiplexer 419, as illustrated in the embodiment of figure 3, the node 410 may comprise, for a or each of the demultiplexer output ports, an optical splitter 413 for splitting the demultiplexed signal into a first optical signal forwarded to the dedicated OSSM input port and a second optical signal forwarded to an optical packet receiver 2 adapted to demodulate optical packets on the wavelength channel on which said demultiplexed signal is carried.

An optical splitters 413 makes it possible to receive packets from the optical bus 30 carried on the demultiplexed signal associated with said optical splitters 413.

When the transit section comprises a wavelength demultiplexer 419, as illustrated in the embodiment of figure 3, the transit section 411 of an optical node 410 may further comprise, for each of the multiplexer input port, an optical coupler 414 for coupling a signal emitted by an optical packet transmitter 3 into the demultiplexed signal.

An optical coupler 414 makes it possible to inject packets into the optical bus carried on the wavelength channel of the demultiplexed signal coming from the wavelength demultiplexer 419.

Optical splitters 413, 513 can be any type of fiber optic splitter known in the art in particular Fused Biconical Taper (FBT) splitter or Planar Lightwave Circuit (PLC) splitters.

Optical couplers 414, 514 can be any type of fiber optic coupler known in the art, for example thermally fused fibers so that their cores get into intimate contact.

When a receiver 2 or a transmitter 3 is dedicated to a given optical bus 30, it may be operable to emit packets on only the wavelength channel associated with said bus. The receiver 2 or transmitter 3 may for example be a non-coherent transmitter using a filter centered on the associated wavelength.

Alternatively, a receiver 2 or a transmitter 3 may be fast tunable to any wavelength channel. A fast tunable receiver 2 or transmitter 3 operates on the same time scale as the packet blockers 418, 518, on an individual packet time scale, to enable sharing of the receiver 2 or transmitter 3 between optical buses 30 in the course of time. The tunable receiver 2 may for example be a coherent receiver. Channel selection may for example be performed by adjusting a local oscillator to the desired wavelength channel.

A or each node further comprises a packet assembler 42 collecting data from client terminals connected to said node and places them into data packets that are sent to a optical packet transmitter 3 for converting into optical packets and emitting into an optical bus.

A or each node further comprises a packet disassembler 41. Optical packet receivers 2 convert optical packets into electronic data packets and forward them to the packet disassembler 41 for taking data packets issued from the optical packet receiver 2 and returning them into a data stream that is sent to client terminals.

If the receivers 2 and transmitters 3 are fast tunable, a fast-switching optical matrix 701 may be arranged between the plurality of optical splitters 513 and the plurality of receivers 2 and/or the plurality of optical couplers 514 and the plurality of transmitters 3, as illustrated by figure 6. The fast-switching optical matrix 701 operates on the same time scale as the packet blockers 418, 518, on an individual packet time scale, to enable sharing of any given receiver 2 or transmitter 3 between optical buses 30 in the course of time. Such sharing makes it possible to improve the rate of occupation of transponders, and therefore reduce capital expenditures needed for providing a given add and drop capacity. Through the fast switching optical matrices 701, one given transponder 2 or 3 can see one packet on one optical bus 30 and then another packet on another optical bus 30 at a subsequent timeslot, i.e. after a very short period of time corresponding to an inter packet guard band. When several transponders 2 or 3 are connected to the same matrix 701, this matrix should be hitless, i.e. it should be able to switch the packets between a pair of input and output ports without disturbing or impacting the other optical connections already set up between the other pairs of input and output ports.

The optical node as described above does not exhibit wavelength contention. Namely, as a function of a configuration state of the WSS module or of the OSSM module, any wavelength channel from any node input port can access any output port, regardless of the other wavelength channels.

As a consequence, the optical node may be equipped gradually with a growing number of OSSM input and output ports or WSS input and output ports over time, as a function of a growth in traffic capacity requirements. Therefore a very flexible pay-as-you-grow feature is obtained to gradually increase capacity.

The optical nodes illustrated by figures 3 to 6, have a degree-2 connectivity. Namely they have two input ports 12 and two output ports 17 and can be connected in a bidirectional manner with two respective neighboring nodes in a transparent network. The same type of architecture could be used for making an optical node with a different, higher or lower degree of connectivity. The optical node can be used in a transparent network or transparent network island with any topology, and in particular in a mesh network.

A packet frame usually consists of a header and a payload. The header encapsulates the destination node of the packet.

As illustrated by figures 3 to 6, the information corresponding to the header may be transported on a dedicated channel called packet control channel 99. The packet control channel may be a wavelength channel of the bus. Alternatively, the header and the payload are transported on the same channel one after the other.

Each node further comprises a synchronizer 43 for disassembling the headers of all packets and for controlling the packet disassembler 41 in function of the information stored in the packet header. If the packet has reached its destination node, the synchronizer 43 sends an order to the packet disassembler 41 for disassembling the packet. The synchronizer 43 may also send an order to the packet blocker 418, 518 for selectively erasing the packet from the bus in order to make room for another packet. The synchronizer 43 may also send an order to the packet assembler 42 for sending a packet on the free slot. The synchronizer 43 may also send an order to the packet receiver 2 for tuning the receiver to the wavelength channel of the packet.

The optical network 20 further comprising at least one scheduler 140, 240 for scheduling the emission of packets by packet transmitters 3 of at least all the nodes 10 connected to a same bus 30.

A scheduler 140, 240 computes a schedule of emissions of the packets to be emitted by all the nodes managed by said scheduler in order to avoid collisions. A scheduler 140, 240 may be a processor or any hardware or software hosted by a network element.

For example, the scheduler 140, 240 may receive emission request from nodes on an emission request channel and issue grants for emission on a grant channel.

The nodes are equipped with a network interface that formulates and emits emission request to the scheduler 140, 240 and emits packets in response to a grant received from the scheduler 140, 240.

The scheduling algorithm implemented by the scheduler 140, 240 may for example be the scheduling algorithm described in "POPI: A Passive Optical Pod Interconnect for High Performance Data Centers" ONDM 2014, 19-22 May, Stockholm, Sweden.

The insertion process may for example be opportunistic. Opportunistic insertion means that first available wavelength channel will be used for transmission, and reservation of slots is not needed. As a result, complex slot reservation methods at network level, inducing significant control plane overhead, are avoided.

In particular, as illustrated by figure 1, the scheduler 140 may be a centralized scheduler for scheduling the emission of packets by all packet transmitters 3 of all nodes 10 of the network. The centralized scheduler 140 assigns time slots on an optical bus to the nodes that have packets to emit. All buses are mutually synchronous. The emission requests and grants for emission may be carried on a wavelength channel common to all buses. In the embodiments wherein, for every two nodes 10 of the network 20, at least one optical bus 30 connects the two nodes 10, every two nodes 10 of the network 20 are transparently connected and resources allocation is very simple.

Alternatively, as illustrated in figure 2, the optical network 20 may comprise, for each optical bus 30, a scheduler 240 assigned to said bus for scheduling the emission of packets by all packet transmitters 3 dedicated to said bus 30. The emission requests and grants may be carried on a wavelength channel of said bus. The scheduler 240 assigns time slots on said optical bus to nodes that have packets to emit. Each bus is synchronous, but all buses are not necessarily synchronous between themselves. In that configuration, a or each optical node 10 comprises, for a or each bus 30 passing through said optical node, a packet transmitter 3 dedicated to said bus 30. However, in order to further increase the performance of the network, when a packet transmitter 3 of a node is not used to emit packets on the bus it is dedicated to, it can be used for emitting a packet on some other bus 30 traversing said node, provided that resynchronization is achieved.

The optical network 20 may further comprise a centralized controller 150 for controlling the configuration of optical buses in the network. The centralized controller 150 may use a network configuration channel to transmit orders for network configuration to the transit sections 411, 511, 611, 711 of the nodes. An order for network configuration may be to reroute one or more wavelength channels from one node input port to a different node output port. In particular, when the transit section 511, 611, 711 of the node comprises a WSS module 516, an order for network configuration may be to reroute one or more wavelength channels of one WSS input port to a different WSS output port. When the transit section 411 of the node comprises an OSSM 416, an order for network configuration may be to reroute one or more OSSM input port to a different OSSM output port. The network configuration channel may be a wavelength channel common to all nodes 10 of the network 20.

The centralized controller 150 allows reconfiguration of the network in order to adapt to a change of the configuration of the network or to a change of the traffic in the network. The centralized controller 150 also allows protection of traffic in case of an optical link failure in the network. Indeed, in the event of an optical link failure, optical buses can be reconfigured to avoid the failed optical link. In particular, backup optical buses may be preconfigured, so that in the event of an optical link failure, optical packets are rerouted to a backup optical bus in order to prevent traffic loss.

Elements such as the controller and schedulers may be implemented in different manners

The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

## Claims

1. Optical network (20) comprising a plurality of optical nodes (10, 410, 510, 610, 710), an optical node comprising:
- a plurality of node input ports (12), each suitable for receiving a WDM input signal comprising optical packets carried on a plurality of wavelength channels;
- a plurality of node output ports (17), each suitable for passing a WDM output signal comprising optical packets carried on a plurality of wavelength channels;
- a transit section (11, 411, 511, 611, 711) configurable to selectively pass or block any wavelength channel from any node input port to any node output port;
- a plurality of optical packet receivers (2) for demodulating optical packets;
- a plurality of optical packet transmitters (3) for emitting optical packets;
the optical network (20) further comprising a plurality of optical links (40), an optical link connecting a node output port of an optical node to a node input port of an adjacent optical node;
the transit section (11, 411, 511, 611, 711) of all the nodes (10, 410, 510, 610, 710) of the optical network (20) being configured so as to generate a plurality of optical buses (30), an optical bus (30) being a transparent optical path passing through a sequence of nodes (10, 410, 510, 610, 710) optically connected in series, so that, for a plurality of pairs of nodes (10, 410, 510, 610, 710) of the network (20), at least one of the optical buses (30) connects the pair of nodes (10, 410, 510, 610, 710),
the optical network (20) further comprising at least one scheduler (140, 240) for scheduling the emission of packets by the packet transmitters (3) of at least all the nodes connected to a same bus (30).

2. Optical network (20) according to claim 1, wherein the transit section (11, 411, 511, 611, 711) of all the nodes (10, 410, 510, 610, 710) of the optical network (20) are configured so that, for any pair of nodes (10, 410, 510, 610, 710) of the network (20), at least one of the optical buses (30) connects the pair of nodes (10, 410, 510, 610, 710).

3. Optical network (20) according to claim 1 or 2, wherein the transit section (511, 611, 711) of an optical node (510, 610, 710) comprises a multiport-to-multiport WSS module (516) comprising :
- a plurality of WSS input ports each connected to a different node input port (12); and
- a plurality of WSS output ports each connected to a different node output port (17);
wherein the multiport-to-multiport WSS module (516) is operable to route independently each wavelength channel from each WSS input port to any WSS output port.

4. Optical network (20) according to the claim 1 or 2, wherein the transit section (411) of an optical node (410) comprises :
- for each node input port (12), a wavelength demultiplexer (419) comprising:
a demultiplexer input port connected to said node input port (12); and
a plurality of demultiplexer output ports;
the wavelength demultiplexer (419) being operable to separate the WDM input signal received at the node input port (12) into demultiplexed signals, each demultiplexed signal carried on a wavelength channel, each demultiplexed signal being outputted to a different demultiplexer output port;
- for each node output port (17), a wavelength multiplexer (415) comprising:
a plurality of multiplexer input ports; and
a multiplexer output port connected to the node output port (17);
the wavelength multiplexer (415) being operable to multiplex the demultiplexed signals received at the multiplexer input ports into a WDM output signal outputted at the node output port (17);
- an OSSM (416) comprising :
for each demultiplexer output port a dedicated OSSM input port, each demultiplexer output port being connected to the dedicated OSSM input port;
for each multiplexer input port a dedicated OSSM output port, each multiplexer input port being connected to the dedicated OSSM output port;
the OSSM (416) being configurable to connect any OSSM input port to any OSSM output port.

5. Optical network (20) according to claim 4, wherein an optical node (410) further comprises, for a demultiplexer output port, an optical splitter (413) for splitting the demultiplexed signal into a first optical signal forwarded to the dedicated OSSM input port and a second optical signal forwarded to an optical packet receiver (2) adapted to demodulate optical packets on the wavelength channel on which said demultiplexed signal is carried.

6. Optical network (20) according to claim 4 or 5, wherein an optical node (410) further comprises, for each of the multiplexer input port, an optical coupler (414) for coupling a signal emitted by an optical packet transmitter (3) into the demultiplexed signal.

7. Optical network (20) according to any one of claims 4 to 6, wherein the transit section (411) of a node (410) comprises, for each of the demultiplexer output ports, a packet blocker (418) configurable to selectively pass or block an individual optical packet carried on the demultiplexed signal.

8. Optical network (20) according to any of the previous claims, wherein the transit section (411, 511, 611, 711) of an optical node (10, 410, 510, 610, 710) comprises for each of the node input ports (12), an optical splitter (513) for splitting the input signal into a first optical signal forwarded to the transit section (11, 411, 511, 611, 711) and a second optical signal forwarded to an optical packet receiver (2) adapted to demodulate optical packets on any wavelength channel.

9. Optical network (20) according to any of the previous claims, wherein the transit section (411, 511, 611, 711) of an optical node (10, 410, 510, 610, 710) comprises for each of the node output ports (17), an optical coupler (514) for coupling a signal emitted by an optical packet transmitter (3) into a signal transiting through the transit section (11, 411, 511, 611, 711).

10. Optical network (20) according to any of the previous claims, wherein the transit section (511, 611, 711) of an optical node (10) further comprises for each node input port (12), a wavelength selective packet blocker(518) configurable to selectively pass or block an individual optical packet carried on any selected wavelength channel.

11. Optical network (20) according to any of the preceding claims, wherein the scheduler (140) is a centralized scheduler for scheduling the emission of packets by all the packet transmitters (3) of all nodes (10, 410, 510, 610, 710).

12. Optical network (20) according to any of claims 1 to 11, wherein an optical node (10, 410, 510, 610, 710) comprises, for each bus (30) passing through said optical node, a packet transmitter (3) dedicated to said bus (30), the optical network (20) comprising, for each optical bus (30), a scheduler (240) for scheduling the emission of packets by all the packet transmitters (3) dedicated to said bus (30).

13. Optical network (20) according to any of the preceding claims, wherein an optical bus (30) is an optical path passing through a sequence of nodes (10, 410, 510, 610, 710) optically connected in series for a given wavelength channel, the transit section (411) of each node (410) from the sequence of nodes being configurable to pass any wavelength channel received at any node input (12) to any node output (17).
